# FASCICULE DE BREVET EUROPEEN

(11) **EP 2 262 751 B1**
(45) Date de publication et mention de la délivrance du brevet: **26.10.2011**
(21) Numéro de dépôt: 09797124.6
(22) Date de dépôt: 30.11.2009
(51) Int. Cl.: C04B 41/60, C11D 7/34, C11D 7/26

(54) **UTILISATION D'ACIDE ALCANE SULFONIQUE COMME NETTOYANT DE CIMENTS, MORTIERS ET BETONS**
VERWENDUNG EINER ALKANSULFONSÄURE ALS MITTEL ZUR REINIGUNG VON ZEMENT, MÖRTEL UND BETON
USE OF AN ALKANESULFONIC ACID AS AGENT FOR CLEANING CEMENT, MORTAR AND CONCRETE

(30) Priorité: 01.12.2008 FR 0858162
(43) Date de publication de la demande: 22.12.2010
(73) Titulaire: Arkema France, 92700 Colombes (FR)
(72) Inventeur: LAFFITTE, Jean-Alex, F-64000 Pau (FR); MONGUILLON, Bernard, F-64210 Arbonne (FR)
(86) Numéro de dépôt international: PCT/FR2009/052340
(87) Numéro de publication internationale: WO 2010/063933

(56) Documents cités:
- AU-B2- 708 209
- FR-A- 2 774 371
- GB-A- 1 362 783
- US-A- 5 451 264

## Description

La présente invention concerne le domaine du nettoyage des ciments, mortiers, bétons, laitances, chaux, et autres. Plus particulièrement, l'invention concerne l'utilisation d'acide alcane sulfonique pour éliminer les salissures de ciments, mortiers, bétons, chaux et leurs laitances, sur tous types de surfaces.

Afin d'éliminer les résidus, en particulier séchés, de ciments, mortiers et bétons sur des surfaces, notamment bétonnières, coffrages, outils, récipients, conduites, et les laitances de ces produits, par exemple sur les sols, et autres ouvrages cimentés ou bétonnés, les solutions existantes aujourd'hui sont, parmi les principales, les actions mécaniques (marteau, marteaux-piqueurs, brosses, spatules, raclettes, etc.) et les actions chimiques, notamment lavages avec des acides.

L'acide le plus communément utilisé dans cette application est l'acide chlorhydrique (ou acide muriatique) qui dissout la chaux, les ciments, mortiers, bétons et autres mélange contenant du ciment et/ou de la chaux, notamment les laitances de chaux et de ciments, et détartre en une seule opération, tout en permettant éventuellement de s'affranchir d'une quelconque opération mécanique.

Malgré son efficacité, l'acide chlorhydrique présente cependant de nombreux inconvénients, parmi lesquels on peut citer le dégagement de vapeurs toxiques, nauséabondes, irritantes, lacrymogènes, ainsi que les problèmes d'effluents en raison des grandes quantités de chlorures rejetées dans l'environnement.

Par ailleurs, en raison de sa nature chimique, la concentration en acide chlorhydrique est limitée à environ 37%, alors qu'il pourrait être intéressant, voire souhaitable de disposer de concentrations en acides beaucoup plus élevées pour éliminer notamment les résidus secs de bétons, ciments, mortiers, chaux, laitances et autres.

D'autres acides encore sont utilisés, comme par exemple l'acide phosphorique dont les rejets de phosphates représentent un gros problème pour l'environnement. En effet, l'utilisation de l'acide phosphorique est aujourd'hui contestée, du fait des rejets de phosphates qu'il engendre.

De même, l'acide sulfamique, dont les rejets sont également considérés nocifs pour l'environnement, en particulier pour les organismes aquatiques, ne peut être utilisé pour l'élimination des salissures de mortiers, ciments, bétons et autres.

Il a été également envisagé d'utiliser des acides organiques, tels que par exemple les acides acétique, citrique, oxalique, glycolique, lactique, formique, etc. A cet égard, on peut faire référence au brevet GB 1 362 783, ou au brevet US 5 451 264, qui recommandent l'acide hydroxyacétique.

Cependant leur acidité étant plus faible que les acides minéraux précités, leur efficacité est moindre et nécessite l'utilisation de plus grandes quantités de produits.

En outre, certains acides se présentent sous forme solide, ce qui conduit à des difficultés de manutention et de formulation (poudres pulvérulentes), et de ce fait ne sont pas des acides préférés pour l'utilisation de la présente invention. De plus certains de ces acides organiques sont considérés nocifs. Ceci est notamment le cas de l'acide oxalique et de l'acide glycolique.

Il reste donc un besoin pour des produits permettant de s'affranchir des inconvénients précédemment listés, en particulier des acides permettant d'éliminer efficacement les résidus et laitances, en particulier les résidus secs, les laitances sèches, de chaux, ciments, mortiers et bétons, et autres composés à base de liant minéral, tout en préservant l'environnement, c'est-à-dire qui soient conformes aux normes environnementales en vigueur, et qui ne présentent pas les inconvénients liés notamment aux dégagements gazeux irritants liés à l'utilisation de l'acide chlorhydrique.

Ainsi, un premier objectif de la présente invention consiste à proposer une alternative efficace à l'utilisation de l'acide chlorhydrique pour nettoyer les surfaces souillées par les bétons, mortiers, ciments, chaux et laitances, et autres, sur tous types de surfaces, et en particulier sur les surfaces métalliques (de type acier par exemple), en béton, ciment, céramique, pierre, bois, cartons, polymères, vernis, peintures, laques, verre, et autres.

Un autre objectif de la présente invention consiste à proposer une alternative efficace aux acides couramment utilisés dans cette application tout en évitant des rejets et des effluents néfastes à l'environnement, ainsi que des dégagements gazeux toxiques et nauséabonds.

D'autres objectifs et avantages apparaîtront au cours de la description de la présente invention qui suit. Ces objectifs sont atteints en totalité ou en partie grâce à la présente invention.

En effet, la demanderesse a maintenant découvert qu'il est possible de nettoyer, de décaper, de manière efficace les surfaces souillées par les bétons, mortiers, ciments, et laitances, et autres, lesdites surfaces pouvant être de tous types, sans présenter les inconvénients précités, en particulier les inconvénients sur l'environnement, les inconvénients liés aux dégagements gazeux et autres, comme cela va être décrit maintenant.

Il a ainsi été découvert qu'il est possible d'éliminer efficacement les ciments, mortiers, bétons, chaux, leurs laitances, et autres produits à base de liant minéral, en utilisant une formulation à base d'au moins un acide alcane-sulfonique.

Les formulations à base d'au moins un acide alcane-sulfonique présentent notamment une efficacité améliorée par rapport à l'acide chlorhydrique largement utilisé habituellement dans ce domaine.

Les acides alcane-sulfoniques présentent l'avantage d'une part d'être moins corrosifs que l'acide chlorhydrique, de ne pas générer de chlorures, d'être biodégradables et de ne pas dégager de produits toxiques ou nauséabonds, ainsi que d'être moins polluants que l'acide phosphorique, en raison des phosphates rejetés dans l'environnement. En outre les acides alcane-sulfoniques peuvent être utilisés sous forme plus concentrée que l'acide chlorhydrique.

L'invention concerne également un procédé d'élimination des ciments, mortiers, bétons, chaux et laitances de ces divers produits, ainsi que tout autre produit à base de liant minéral comme par exemple les bétons armés.

Ainsi l'invention concerne un procédé d'élimination desdits ciments, mortiers, bétons et autres, qu'ils soient sous forme humide ou séchée, par exemple pris en masse, ou encore présents sur tous types de surfaces, notamment métalliques (fer, aluminium, aciers et autres), en bois, polymères (plastiques, peintures, laques, vernis), verres, pierres, céramiques, porcelaines, terre cuite, et autres.

L'utilisation de la présente invention trouve des applications tout à fait intéressantes dans les domaines des cimenteries (usines à bétons, bétonnières, toupies, canalisations, outils et autres), de la construction (éléments de maçonnerie, outils, coffrages, carrelages, sols, allées et voies carrossables, tels que trottoirs, routes, pistes d'aérodromes, et autres).

En effet, les formulations à base d'acide(s) alcane-sulfonique présentent notamment une plus grande facilité d'utilisation et de manipulation par rapport à l'acide chlorhydrique utilisé habituellement pour l'élimination de ciments, bétons, mortiers et autres. En effet, l'utilisation de formulations à base d'acide(s) alcane-sulfonique(s) ne produit pas ou peu de dégagements gazeux toxiques, irritants ou lacrymogènes.

Ainsi, selon un premier objet, l'invention concerne l'utilisation d'au moins un acide alcane-sulfonique comme nettoyant du ciment, mortier, béton, chaux, et autres produits dérivés à base de liant minéral. Plus particulièrement l'invention concerne l'utilisation d'au moins un acide alcane-sulfonique pour le nettoyage de surfaces souillées par les bétons, mortiers, ciments, et laitances, et autres, sur tous types de surfaces, comme indiquées précédemment.

Plus spécifiquement, la présente invention propose un produit de remplacement, notamment de l'acide chlorhydrique, pour le nettoyage des bétons, mortiers, ciments et autres, ledit produit de remplacement étant biodégradable, peu toxique, ne dégageant pas ou peu de gaz irritants ou lacrymogènes, ne générant pas d'effluents nocifs pour l'environnement et pouvant être utilisés sous forme plus concentrée que l'acide chlorhydrique.

Le ciment est bien connu de l'homme du métier et conduit, après mélange avec de l'eau et séchage, à un produit solide, plus ou moins compact. Un ciment est ainsi un liant minéral de composition plus ou moins complexe, et au sens de la présente invention, le ciment peut être tout liant minéral, de type ciment prompt, ciment portland, ciments artificiels, chaux, pouzzolanes, argiles, mais aussi tout liant susceptible de lier des corps durs entre eux.

Le mortier est obtenu par mélange de ciment(s) avec des quantités plus ou moins importantes de granulats sous forme de sable ou autres gravillons de faible granulométrie. Les bétons correspondent à des mélanges de ciment(s) et ou de mortier(s) avec des quantités plus ou moins importantes de granulats.

Lors de la préparation de ciments, mortiers et bétons, on observe quelquefois, et généralement en surface, la formation des résidus blanchâtres que l'on appelle laitances et qui peuvent également être éliminés grâce à l'utilisation selon la présente invention.

L'utilisation de la présente invention permet également le nettoyage des produits dérivés des ciments, mortiers, bétons, chaux, et leurs laitances. Par « produits dérivés », on entend tous produits solides obtenus à partir d'un mélange d'eau et de ciment et/ou de chaux.

Dans la suite du présent exposé, on utilisera plus simplement le terme « ciments » pour désigner tous les produits susceptibles d'être obtenus à partir de mélanges d'eau et de ciments et/ou de chaux, et en particulier les ciments, mortiers, bétons, chaux, les laitances desdits produits, ainsi que leurs produits dérivés.

Au sens de la présente invention, on entend par « nettoyage », le nettoyage, le décapage de tous types de surfaces, telles qu'indiquées précédemment, souillées, enduites, recouvertes, en totalité ou en partie par des résidus, écailles, dépôts, secs ou encore humides, générés au cours de l'utilisation, de la préparation de produits à base de ciment(s), et notamment les ciments, mortiers, bétons, mais aussi les laitances de ciments, mortiers, bétons, la chaux, les laitances de chaux, et produits dérivés, par élimination, dissolution, desdits résidus, écailles ou dépôts.

Le terme « nettoyage » englobe également l'élimination partielle ou totale des ciments et produits dérivés, qui peuvent avoir pris en masse, de manière non prévue ou non souhaitable, dans divers conteneurs, tels que bétonnières, coffrages, et autres, et qui sont habituellement retirés/éliminés par des moyens mécaniques, tels que marteaux, marteaux-piqueurs et autres.

Dans la présente invention, on entend par acide alcane-sulfonique préférentiellement les acides alcane-sulfoniques de formule R-SO₃H, où R représente une chaîne hydrocarbonée saturée, linéaire ou ramifiée, comportant de 1 à 4 atomes de carbone.

Les acides alcane-sulfoniques utilisables dans le cadre de la présente invention sont particulièrement choisis parmi l'acide méthane-sulfonique, l'acide éthane-sulfonique, l'acide n-propane-sulfonique, l'acide *iso*-propane-sulfonique, l'acide n-butane-sulfonique, l'acide *iso*-butane-sulfonique, l'acide *sec*-butane-sulfonique, l'acide *tert*-butane-sulfonique, et les mélanges de deux ou plusieurs d'entre eux en toutes proportions.

Selon un mode de réalisation préféré, l'acide alcane-sulfonique utilisé dans le cadre de la présente invention est l'acide méthane-sulfonique ou l'acide éthane-sulfonique, de manière tout à fait préférée l'acide utilisé est l'acide méthane-sulfonique.

Ainsi, l'utilisation selon la présente invention met en oeuvre au moins un acide alcane-sulfonique choisi parmi les acides alcane-sulfoniques à chaîne linéaire ou ramifiée comportant de 1 à 4 atomes de carbone, et de préférence au moins de l'acide méthane-sulfonique (AMS).

Tout type de formulation comprenant au moins un acide alcane-sulfonique peut convenir. En règle générale, la formulation comprend de 0,01% à 100 % en poids d'acide alcane-sulfonique, plus généralement de 0,05 % à 90 % en poids, en particulier de 0,5 % à 75 % en poids d'acide(s) alcane-sulfonique(s).

La concentration en acide(s) alcane-sulfonique(s) dans la formulation dépend de nombreux facteurs, parmi lesquels on peut citer la quantité de ciments à nettoyer, la nature et la forme de la surface à nettoyer, la température à laquelle est appliquée la formulation, et autres. L'homme du métier saura adapter la concentration en acide dans la formulation sans efforts excessifs.

On préfère les solutions concentrées, par exemple de 60% à 100%, de préférence environ 70% à 100% en poids d'acide alcane-sulfonique, par rapport au poids total de ladite formulation, lorsque l'on souhaite enlever des quantités importantes de ciments, ou à la surface de matériaux peu sensibles aux attaques acides. On préfère des solutions moins concentrées de 0,01 % à 60%, de préférence de 0,05% à 50% pour des quantités plus faible de ciments à éliminer, ou pour le nettoyage des laitances sur des surfaces, notamment sur des surfaces sensibles aux attaques acides.

La formulation est par exemple une formulation aqueuse, organique, ou encore hydro-organique. La formulation peut être préparée sous forme de mélange concentré, concentré pouvant être dilué par l'utilisateur final. En variante, la formulation peut également être une formulation prête à l'emploi, c'est-à-dire qu'elle ne nécessite pas d'être diluée. Enfin, au sens de la présente invention, la formulation peut être un acide alcane-sulfonique pur, ou encore un mélange d'acides alcane-sulfoniques purs, c'est-à-dire que la formulation ne contient que un ou plusieurs acides-sulfoniques, sans autre additif de formulation ou autre solvant ou diluant.

On peut par exemple utiliser de l'acide méthane-sulfonique en solution aqueuse commercialisé par la société Arkema sous la dénomination Scaleva^{®}, ou encore sous la dénomination Lutropur^{®} commercialisé par la société B.A.S.F., prête à l'emploi ou diluée à l'eau dans les proportions indiquées ci-dessus.

Outre le ou les acides alcane-sulfoniques, la formulation utilisée dans la présente invention peut éventuellement comprendre un ou plusieurs additifs, tels que ceux choisis parmi :
- solvants, agents hydrotropes ou solubilisants (par exemple alcools, esters, cétones, amides, et autres),
- biocides, désinfectants (acide bromo-acétique, acide peracétique, eau oxygénée, et autres),
- agents rhéologiques ou de texture ou épaississants ou gélifiants (sucres, polysaccharides, alginates, silice, silice amorphe, gommes et autres),
- acides organiques ou minéraux (par exemple sulfurique, phosphorique, nitrique, sulfamique, acétique, citrique, formique, lactique, glycolique, oxalique et autres),
- sels d'alcalins, d'alcalino-terreux, de métaux, en particulier les fluorures, chlorures, iodures, bromures d'alcalins et/ou d'alcalino-terreux, de préférence les chlorures et les fluorures, de préférence encore les fluorures, notamment les fluorures de sodium ou de calcium,
- retardateurs de flamme,
- conservateurs,
- tensio-actifs anioniques, cationiques, non-ioniques ou amphotères (tels que alcools et/ou amines éthoxylés, alkyl- et/ou aryl-sulfonates) émulsifiants, détergents, savons, et autres ;
- agents moussants, antimoussants,
- anti-gels (par exemple ethylèneglycol, propylèneglycol, et autres) ;
- colorants,
- parfums, agents odorants,
et autres additifs connus de l'homme du métier.

Selon une variante, la formulation est une formulation sous forme de gel. Il a en effet été observé que les formulations sous forme de gel d'acide(s) alcane-sulfonique sont très efficaces pour l'élimination des salissures à base de ciments, telles que décrites précédemment, non seulement en raison du gel lui-même qui permet une action plus longue du principe actif acide (le gel « adhère » plus longuement sur les surfaces, par rapport à une formulation aqueuse), mais aussi présente un pouvoir nettoyant amélioré, par rapport à d'autres formulations-gels.

Ainsi, selon un autre aspect, la présente invention concerne l'utilisation d'une formulation sous forme de gel comprenant :
- de 0,01 % à 97 % en poids, de préférence de 0,05 % à 75 % en poids et plus particulièrement de 0,5 % à 70 % en poids, d'au moins un acide alcane-sulfonique, de préférence l'acide méthane-sulfonique ;
- de 0,1 % à 30 % en poids, de préférence de 0,5 % à 15 % en poids et plus particulièrement de 1 % à 10 % en poids, d'au moins un agent gélifiant ;
- de 0,1 % à 30 % en poids, de préférence de 0,5 % à 15 % en poids, d'au moins un additif choisi parmi ceux cités ci-dessus ; et
- le complément à 100 % d'eau et/ou solvant organique.

Les agents gélifiants et les tensio-actifs utilisables dans les formulations sous forme de gel peuvent être de tout type. L'homme du métier saura, sans difficulté particulière et en s'inspirant des exemples qui suivent, choisir et adapter la nature des agents gélifiants et des tensio-actifs appropriés.

Selon un autre aspect, la présente invention concerne l'utilisation d'une formulation sous forme de gel moussant. Les gels moussants sont en effet tout particulièrement intéressants en raison du fait qu'ils produisent une mousse collante, autrement dit une mousse adhérente aux surfaces souillées, tout en requérant une consommation moindre de matière active acide nettoyante, et présentent l'avantage d'une meilleure rinçabilité, c'est-à-dire une élimination plus simple et plus efficace, tout en nécessitant une moins grande quantité d'eau.

Ainsi, la présente invention concerne également l'utilisation d'une formulation sous forme de gel moussant comprenant :
- de 0,01 % à 97 % en poids, de préférence de 0,05 % à 75 % en poids et plus particulièrement de 0,5 % à 70 % en poids, d'au moins un acide alcane-sulfonique, de préférence d'acide méthane-sulfonique ;
- de 0,1 % à 30 % en poids, de préférence de 0,5 % à 15 % en poids et plus particulièrement de 1 % à 10 % en poids, d'au moins un agent moussant ;
- de 0 à 30 % en poids, de préférence de 0,5 % à 15 % en poids et plus particulièrement de 1 % à 10 % en poids, d'au moins un agent gélifiant ;
- de 0 à 30 % en poids, de préférence de 0,5 % à 15 % en poids, d'au moins un additif choisi parmi ceux cités ci-dessus, dont de préférence de 0 à 10% en poids, de préférence de 0,1 à 5% en poids, d'un agent solubilisant ou hydrotrope, et de 0 à 20 % en poids, de préférence de 0,5 % à 10 % en poids, d'au moins un tensioactif ; et
- le complément à 100 % d'eau et/ou solvant organique.

Selon le domaine et le mode d'application, la formulation peut être préparée sous forme de concentré, et avec une faible viscosité appropriée, puis diluée avant emploi jusqu'à obtenir l'efficacité attendue, quant à la viscosité et au pouvoir moussant.

Dans la formulation de gel moussant ci-dessus, l'agent moussant peut être choisi parmi les agents moussants couramment utilisés par l'homme du métier, et de préférence parmi les oxydes d'amines, comme par exemple :
- les oxydes de diméthylalkylamine, la chaîne alkyle étant une chaîne « grasse », contenant par exemple de 10 à 30 atomes de carbone, de préférence de 12 à 22 atomes de carbone, ;
- les oxydes d'amines éthoxylées ; et
- les mélanges de deux ou plusieurs d'entre elles.

L'utilisation d'au moins un oxyde d'amine éthoxylée, tel que, à titre non limitatif le Cecajel^{®} OX100 de la société CECA, ou l'Aromox^{®} T12 de la société Akzo seul ou association avec au moins un oxyde de diméthylalkylamine permet d'apporter de la stabilité au gel moussant.

Les agents moussants, et en particulier ceux décrits ci-dessus, forment généralement des gels lorsqu'ils sont mélangés à l'eau, c'est-à-dire qu'ils augmentent la viscosité de la formulation, sans qu'il soit nécessaire d'ajouter un agent gélifiant. Toutefois l'ajout d'un tel agent gélifiant n'est pas exclu de la présente invention.

Parmi les agents solubilisants ou hydrotropes utilisables dans les formulations selon l'invention, on peut citer, à titre d'exemple et de manière non limitative les xylène- ou cumène-sulfonates de sodium. De tels agents ne sont toutefois pas indispensables dans les formulations acides selon l'invention.

Une formulation aqueuse, organique ou hydro-organique, sous forme de solution, de gel ou encore sous forme de gel moussant, particulièrement préférée est une formulation comprenant de 0,01 % à 95 %, de préférence de 0,05% à 75 %, de préférence encore de 0,5 % à 50% en poids d'acide méthane-sulfonique.

Les formulations utilisées selon la présente invention, qu'elles soient sous forme liquides, de gels ou de gels moussants, concentrées ou diluées, peuvent être appliquées selon toute méthode connue de l'homme du métier, et en particulier sous pression, ou encore à l'aide d'un pistolet pulvérisateur.

La concentration en acide(s) alcane-sulfonique(s) peut ainsi varier dans de très grandes proportions, selon la nature et la quantité des ciments à éliminer, mais aussi en fonction de la nature des surfaces à nettoyer.

Selon un autre aspect, la présente invention concerne un procédé d'élimination des ciments, mortiers, bétons, chaux, laitances et produits dérivés, tels que définis précédemment, présents par exemple sous forme de résidus, écailles, dépôts, secs ou encore humides, générés au cours de l'utilisation, de la préparation de produits à base de ciment(s), comprenant au moins une étape de mise en contact d'une quantité efficace d'au moins un acide alcane-sulfonique, comme défini précédemment, de préférence l'acide méthane-sulfonique, sous forme de formulations aqueuse, organique ou hydro-organique, sous forme de solution, de gel ou de gel moussant, telles qu'elles viennent d'être décrites, avec les ciments, mortiers, bétons, chaux, laitances et produits dérivés, à éliminer, par contact, immersion, aspersion, pulvérisation, application d'une couche plus ou poins épaisse, éventuellement à l'aide d'outils appropriés connus de l'homme du métier (pinceaux, brosses, spatules, et autres), ladite étape de mise en contact étant éventuellement suivie d'une ou plusieurs étapes de rinçage et/ou de séchage.

La température à laquelle est effectué le procédé peut varier dans de grandes proportions et est généralement comprise entre -20°C et +150°C, de préférence entre 0°C et 80°C, de préférence encore entre 10°C et 80°C. Selon un mode de réalisation préféré, la température d'utilisation est la température ambiante ou encore une température comprise entre la température ambiante et environ 80°C.

Il peut ainsi être envisagé de mettre en température l'acide alcane-sulfonique et la surface à traiter, cette température pouvant être identique ou différente, ou encore de mettre en température soit l'acide alcane-sulfonique, soit la surface à traiter.

On peut ainsi traiter en extérieur, des surfaces souillées par des ciments à température ambiante (par exemple 10°C) à l'aide d'une formulation d'acide(s) alcane-sulfonique(s) portée à 70°C, ou encore traiter des surfaces souillées par des résidus de ciments à une température élevée (par exemple environ 100°C) à l'aide d'une formulation d'acide(s) alcane-sulfonique(s) à température ambiante (par exemple 20°C). Il peut également être envisagé d'immerger totalement les surfaces à traiter dans une formulation d'acide(s) alcane-sulfonique(s) portée par exemple à une température d'environ 60°C, par exemple pour éliminer des résidus de ciments présents sur des textiles, enduits ou non, des films plastique, et autres.

Enfin, après l'étape de traitement(s), et de rinçage(s) éventuel(s), la surface nettoyée peut être, le cas échant et si nécessaire, séchée, selon toute méthode connue de l'homme du métier, par exemple à l'air, sous courant d'air plus ou moins chaud, en étuve, par chauffage (électrique, lampes chauffantes), essuyage (papiers ou textiles absorbants), et autres.

Comme indiqué précédemment, l'acide alcane-sulfonique est avantageusement mis en oeuvre sous forme d'une formulation, par exemple formulation aqueuse, organique ou hydro-organique, sous forme liquide, de gel ou de gel moussant, comme défini précédemment.

Dans le procédé de l'invention tel qu'il vient d'être décrit, on entend par quantité efficace une quantité permettant la dissolution des résidus, écailles, dépôts de ciments et l'élimination de toutes traces de ciments.

Cette quantité peut varier dans de grandes proportions, selon les surfaces à traiter et la quantité de ciments, de la température et de la pression de la formulation utilisée, de la durée souhaitée du procédé d'élimination, et autres.

Ainsi, la quantité d'acide sera avantageusement établie pour permettre une élimination totale des ciments, tout en observant une quantité minimale d'acide(s), essentiellement pour des raisons économiques.

Cette opération d'élimination des ciments peut être réitérée une ou plusieurs fois selon la quantité de ciment, béton, mortier et autres à éliminer, et son degré d'incrustation sur les surfaces à traiter.

La mise en contact d'une quantité efficace d'au moins un acide alcane-sulfonique est suivie d'un temps de réaction nécessaire à la dissolution des ciments que l'on souhaite éliminer, ce temps de réaction pouvant varier de quelques secondes à quelques heures, voire quelques jours, selon la température à laquelle est effectué le nettoyage, la pression d'application du ou des acide(s) alcane-sulfonique(s), la quantité de ciments éliminer, leurs degrés d'incrustation, ainsi que la nature des surfaces à traiter.

Le traitement par au moins un acide alcane-sulfonique tel qu'il vient d'être défini peut éventuellement être accompagné et/ou suivi d'une ou plusieurs opérations mécaniques (agitation, raclage, brossage, et autres), afin d'améliorer l'action chimique acide, si nécessaire.

Enfin, le traitement peut être suivi d'une ou plusieurs opérations de rinçage, par exemple à l'eau claire, solvant(s) ou mélange(s) eau/solvant(s).

Dans le procédé de l'invention tel qu'il vient d'être décrit, on entend par quantité efficace une quantité permettant la dissolution et l'élimination de tout ou partie des salissures, résidus, écailles, secs ou non, de ciments.

Cette quantité peut varier dans de grandes proportions, selon les surfaces à traiter et la quantité de ciments, de la température et de la pression de la formulation utilisée, de la durée souhaitée du procédé d'élimination et autres.

Ainsi, la quantité d'acide sera avantageusement ajustée pour permettre une élimination totale des résidus, écailles, séchés ou non, de ciments, bétons, mortiers, laitances et autres, tout en observant une quantité minimale d'acide(s), essentiellement pour des raisons économiques.

Les acides alcane-sulfoniques, notamment l'acide méthane-sulfonique, se sont montrés efficaces dans la dissolution des ciments, et notamment des composants principaux de ces produits, sans générer de dégagements gazeux irritants et lacrymogènes.

Par ailleurs, l'utilisation d'au moins un acide alcane-sulfonique selon la présente invention présente l'avantage de ne générer que peu voire pas de corrosion, notamment lors du nettoyage de surfaces métalliques (centrales à bétons, bétonnières, coffrages métalliques), corrosion qui est fréquemment observée sur lesdites surfaces métalliques lors de l'utilisation de solutions plus ou moins concentrées d'acide chlorhydrique.

Les acides alcane-sulfoniques peuvent également être utilisés à des concentrations élevées, afin d'augmenter leur efficacité, concentrations qui peuvent être de 50%, 70%, voire 100% en poids, alors que la concentration maximale en acide chlorhydrique ne peut être au maximum que de 37%, en raison de la nature chimique intrinsèque de cet acide.

En outre, les acides alcane-sulfoniques utilisés dans la présente invention présentent, par rapport aux acides arylsulfoniques, l'avantage de générer une plus faible demande en oxygène au niveau des stations de traitements des effluents (Demande chimique en oxygène, DCO), et par conséquent permettre une plus forte concentration de rejets organiques dans lesdites stations.

La présente invention décrite ci-dessus montre qu'il est possible d'éliminer les ciments sur tous types de surfaces, telles que, et de manière non limitative les surfaces métalliques (fer, aciers, cuivre, alliages, et autres), bétons, ciments, carrelages, porcelaine, bois, papiers, cartons, textiles, polymères (plastiques, vernis, peintures, laques), verres, et autres.

La présente invention montre également qu'il est possible de nettoyer lesdites surfaces des résidus, séchés ou non, indésirables, mais aussi d'éliminer les ciments, mortiers, bétons, chaux, qui peuvent avoir pris en masse dans divers conteneurs, tels que bétonnières, coffrages, et autres, et qui sont habituellement retirés par des moyens mécaniques, tels que marteaux, marteaux-piqueurs et autres.

Ainsi, les acides alcane-sulfoniques peuvent avantageusement être utilisés en remplacement des acides couramment utilisés, pour l'élimination des ciments dans un grand nombre de domaines d'application parmi lesquels on peut citer de manière non limitative les domaines de la construction (cimenteries, bétonnières, toupies à béton, coffrages, carrelage, carreau, pierre, outils, et autres), des transports de fluides (tubes, tuyaux, et autres), tels que eau, eaux usées, eaux pluviales, égouts, pétrole, ou de gaz, gaz naturel entre autres, pour ne citer qu'un certain nombre d'entre eux.

Il doit être compris que l'utilisation selon la présente invention permet non seulement le nettoyage des ciments, mais aussi de manière concomitante, le nettoyage d'autre(s) type(s) de salissure(s) pouvant être présente(s) sur les surfaces à traiter, en raison du caractère acide des acides alcane-sulfoniques utilisés.

Par exemple, les acides alcanes sulfoniques utilisés dans le cadre de la présente invention peuvent s'avérer efficaces pour nettoyer tout type de salissures, telles que rouille, tartre, mais aussi tous types de salissures organiques (déjections et fientes animales), et autres.

La présente invention est maintenant illustrée au moyen des exemples qui suivent, sans présenter aucun caractère limitatif, et qui ne peuvent être par conséquent compris comme susceptibles de restreindre la portée de l'invention telle que revendiquée.

### Exemple 1

Pour apprécier l'efficacité des acides alcane-sulfoniques dans l'élimination de ciments, mortiers, bétons, chaux et laitances de ces produits, on réalise des tests de dissolution, selon le protocole suivant :

On prépare dans une bouteille de verre à fond plat, un bloc de ciment à partir de 6 g de ciment en poudre (ciment Technocem commercialisé par la société SOCLI) et de 3 g d'eau. On laisse sécher pendant 24 heures à température ambiante.

On verse dans la bouteille 100 g de solution aqueuse acide (concentration 5% d'acide en poids dans l'eau). La bouteille est fermée par un bouchon, puis placée dans un bain agité pendant 24 heures à température ambiante.

La solution est ensuite filtrée sur un filtre membrane (Acrodisc^{®} 25 mm de diamètre et 0,2 µm de porosité) et le résidu est séché (à l'étuve à 80°C pendant une nuit) puis pesé pour évaluer le pourcentage de ciment résiduel non dissous. Plus la quantité de ciment résiduel est faible, meilleure est l'efficacité de l'acide testé.

Le test a été réalisé avec trois solutions aqueuses à 5% en poids :
- acide méthane-sulfonique (Scaleva^{®} commercialisé par Arkema) ;
- acide phosphorique (Normapur, commercialisé par VWR) ; et
- acide glycolique (Aldrich).

Les résultats sont présentés dans le tableau 1 suivant :

**-- Tableau 1 --**

| ***Solution aqueuse à 5% en poids*** | ***Résidu de ciment (% en poids par rapport au poids initial)*** |
|---|---|
| Scaleva^{®} | 59 |
| Acide phosphorique | 63 |
| Acide glycolique | 82 |

On remarque que les acides alcane-sulfoniques, notamment l'acide méthane-sulfonique, présentent une efficacité comparable à celle de l'acide phosphorique, mais sans générer bien entendu, de phosphates nocifs pour l'environnement.

On note également que l'acide méthane-sulfonique est beaucoup plus efficace dans cette application que l'acide glycolique, utilisé ici comme exemple d'acide organique, c'est-à-dire acide faible.

## Revendications

1. Utilisation d'au moins un acide alcane-sulfonique de formule R-SO₃H, où R représente une chaîne hydrocarbonée saturée, linéaire ou ramifiée, comportant de 1 à 4 atomes de carbone, comme nettoyant du ciment, mortier, béton, chaux, et autres produits dérivés.

2. Utilisation selon la revendication 1, dans laquelle l'acide alcane-sulfonique est choisi parmi l'acide méthane-sulfonique, l'acide éthane-sulfonique, l'acide n-propane-sulfonique, l'acide *iso*-propane-sulfonique, l'acide n-butane-sulfonique, l'acide *iso-*butane-sulfonique, l'acide *sec*-butane-sulfonique, l'acide *tert*-butane-sulfonique, et les mélanges de deux ou plusieurs d'entre eux en toutes proportions.

3. Utilisation selon la revendication 1 ou la revendication 2, dans laquelle l'acide alcane-sulfonique est l'acide méthane-sulfonique ou l'acide éthane-sulfonique, de préférence l'acide méthane-sulfonique.

4. Utilisation selon l'une quelconque des revendications précédentes, dans laquelle au moins un acide alcane-sulfonique est utilisé sous forme de formulation, la concentration en acide(s) alcane-sulfonique(s) étant comprise entre 0,01 % et 100 %, plus généralement entre 0,05 % et 90 %, en particulier entre 0,5 % et 75 %, en poids par rapport au poids total de ladite formulation.

5. Utilisation selon l'une quelconque des revendications précédentes, dans laquelle au moins un acide alcane-sulfonique est présent dans une formulation aqueuse, organique, ou hydro-organique, concentrée, prête à l'emploi ou à diluer avant utilisation.

6. Utilisation selon l'une quelconque des revendications précédentes, dans laquelle au moins un acide alcane-sulfonique est utilisé en association avec un ou plusieurs additifs choisis parmi :
• solvants, agents hydrotropes ou solubilisants ou gélifiants (par exemple alcools, esters, cétones, amides, et autres),
• biocides, désinfectants (acide bromo-acétique, acide peracétique, eau oxygénée, et autres),
• agents rhéologiques ou de texture ou épaississants (sucres, polysaccharides, alginates, silice, silice amorphe, gommes et autres),
• acides organiques ou minéraux (par exemple sulfurique, phosphorique, nitrique, sulfamique, acétique, citrique, formique, lactique, glycolique, oxalique et autres),
• retardateurs de flamme,
• conservateurs,
• tensio-actifs anioniques, cationiques, non-ioniques ou amphotères (tels que alcools et/ou amines éthoxylés, alkyl- et/ou aryl-sulfonates), émulsifiants, détergents, savons, et autres ;
• agents moussants, antimoussants,
• anti-gels (par exemple ethylèneglycol, propylèneglycol, et autres) ;
• colorants,
• parfums, agents odorants,
et autres additifs connus de l'homme du métier.

7. Utilisation selon l'une quelconque des revendications précédentes, dans laquelle au moins un acide alcane-sulfonique est utilisé en formulation liquide, gel ou gel-moussant.

8. Procédé d'élimination des ciments, mortiers, bétons, chaux, laitances et produits dérivés, comprenant au moins une étape de mise en contact d'une quantité efficace d'au moins un acide alcane-sulfonique, de préférence l'acide méthane-sulfonique, avec les ciments, mortiers, bétons, chaux, laitances et produits dérivés à éliminer, par contact, immersion, aspersion, pulvérisation, application d'une couche plus ou poins épaisse, éventuellement à l'aide d'outils appropriés connus de l'homme du métier (pinceaux, brosses, spatules, et autres), ladite étape de mise en contact étant éventuellement suivie d'une ou plusieurs étapes de rinçage et/ou de séchage.

9. Procédé selon la revendication 8, **caractérisé en ce qu'**il est effectué à une température comprise entre -20°C et +150°C, de préférence entre 0°C et 80°C, de préférence encore entre 10°C et 80°C, de préférence à température ambiante ou encore à une température comprise entre la température ambiante et environ 80°C.

10. Utilisation selon l'une quelconque des revendications 1 à 7 pour le nettoyage de ciments, mortiers, bétons, chaux, laitances et produits dérivés, sur tous types de surfaces, en particulier les surfaces métalliques (fer, aciers, cuivre, alliages, et autres), bétons, ciments, carrelages, carreau, pierre, porcelaine, bois, papiers, cartons, textiles, polymères (plastiques, vernis, peintures, laques), verres, et autres.

## Claims

1. Use of at least one alkanesulfonic acid of formula R-SO₃H, where R represents a saturated and linear or branched hydrocarbon chain comprising from 1 to 4 carbon atoms, as agent for cleaning cement, mortar, concrete, lime and other derived products.

2. Use according to Claim 1, in which the alkanesulfonic acid is chosen from methanesulfonic acid, ethanesulfonic acid, n-propanesulfonic acid, isopropanesulfonic acid, n-butanesulfonic acid, isobutanesulfonic acid, sec-butanesulfonic acid, *tert-*butanesulfonic acid and the mixtures of two or more of them in all proportions.

3. Use according to Claim 1 or Claim 2, in which the alkanesulfonic acid is methanesulfonic acid or ethanesulfonic acid, preferably methanesulfonic acid.

4. Use according to any one of the preceding claims, in which at least one alkanesulfonic acid is used in the formulation form, the concentration of alkanesulfonic acid(s) being between 0.01% and 100% by weight, more generally between 0.05% and 90% by weight, in particular between 0.5% and 75% by weight, with respect to the total weight of said formulation.

5. Use according to any one of the preceding claims, in which at least one alkanesulfonic acid is present in an aqueous, organic or aqueous/organic formulation which is concentrated, ready-for-use or to be diluted before use.

6. Use according to any one of the preceding claims, in which at least one alkanesulfonic acid is used in combination with one or more additives chosen from:
• hydrotropic or solubilizing agents or solvents (for example alcohols, esters, ketones, amides and others),
• biocides or disinfectants (bromoacetic acid, peracetic acid, aqueous hydrogen peroxide solution and others),
• rheological or texturizing or thickening or gelling agents (sugars, polysaccharides, alginates, silica, amorphous silica, gums and others),
• organic or inorganic acids (for example sulfuric acid, phosphoric acid, nitric acid, sulfamic acid, acetic acid, citric acid, formic acid, lactic acid, glycolic acid, oxalic acid and other acids),
• flame retardants,
• preservatives,
• surfactants of anionic, cationic, nonionic or amphoteric type (such as ethoxylated alcohols and/or amines, or alkyl- and/or arylsulfonates), emulsifiers, detergents, soaps and others;
• foaming or antifoaming agents,
• antifreezes (for example ethylene glycol, propylene glycol and others);
• colorants,
• fragrances or odorous agents,
and other additives known to a person skilled in the art.

7. Use according to any one of the preceding claims, in which at least one alkanesulfonic acid is used in a liquid, gel or foaming gel formulation.

8. Method for removing cement, mortar, concrete, lime, laitances and derived products, comprising at least one stage in which an effective amount of at least one alkanesulfonic acid, preferably methanesulfonic acid, is brought into contact with the cement, mortar, concrete, lime, laitances and derived products to be removed, by contact, immersion, sprinkling, spraying or application of a more or less thick layer, optionally using appropriate tools known to a person skilled in the art (brushes, including fine brushes, spatulas and others), said stage of bringing into contact being optionally followed by one or more stages of rinsing and/or drying.

9. Method according to Claim 8, **characterized in that** it is carried out at a temperature between -20°C and +150°C, preferably between 0°C and 80°C, more preferably between 10°C and 80°C, preferably at ambient temperature or at a temperature between ambient temperature and approximately 80°C.

10. Use according to any one of Claims 1 to 7 in the cleaning of cement, mortar, concrete, lime, laitances and derived products on all types of surfaces, in particular metal surfaces (iron, steel, copper, alloys and others) or surfaces made of concrete, cement, tiling, tiles, stone, porcelain, wood, paper, board, textiles, polymers (plastics, varnishes, paints, lacquers), glass and others.

## Patentansprüche

1. Verwendung mindestens einer Alkansulfonsäure der Formel R-SO₃H, wobei R für eine gesättigte, lineare oder verzweigte Kohlenwasserstoffkette mit 1 bis 4 Kohlenstoffatomen steht, als Abreinigungsmittel für Zement, Mörtel, Beton, Kalk und andere abgeleitete Produkte.

2. Verwendung nach Anspruch 1, wobei die Alkansulfonsäure unter Methansulfonsäure, Ethansulfonsäure, n-Propansulfonsäure, Isopropansulfonsäure, n-Butansulfonsäure, Isobutansulfonsäure, sec.-Butansulfonsäure, tert.-Butansulfonsäure und Mischungen von zwei oder mehr davon in allen Anteilen ausgewählt ist.

3. Verwendung nach Anspruch 1 oder Anspruch 2, wobei es sich bei der Alkansulfonsäure um Methansulfonsäure oder Ethansulfonsäure, vorzugsweise Methansulfonsäure, handelt.

4. Verwendung nach einem der vorhergehenden Ansprüche, wobei mindestens eine Alkansulfonsäure in Formulierungsform verwendet wird, wobei die Alkansulfonsäurekonzentration zwischen 0,01 und 100 Gew.-%, allgemeiner zwischen 0,05 und 90 Gew.-% und insbesondere zwischen 0,5 und 75 Gew.-%, bezogen auf das Gesamtgewicht der Formulierung, liegt.

5. Verwerdung nach einem der vorhergehenden Ansprüche, wobei mindestens eine Alkansulfonsäure in einer wäßrige, organischen oder wäßrig-organischen, konzentrierten, gebrauchsfertigen oder vor der Verwerdung zu verdünnenden Formulierung vorliegt.

6. Verwerdung nach einem der vorhergehenden Ansprüche, wobei mindestens eine Alkansulfonsäure in Kombination mit einem oder mehreren unter
• Lösungsmitteln, Hydrotropika oder Lösungsvermittlern (beispielsweise Alkoholen, Estern, Ketonen, Amiden u.a.),
• Bioziden, Desinfektionsmitteln (Bromessigsäure, Peressigsäure, wäßriger Wasserstoffperoxidlösung u.a.),
• Rheologie- oder Texturmitteln oder Verdickern oder Gelbildnern (Zuckern, Polysacchariden, Alginaten, Siliciumdioxid, amorphem Siliciumdioxid, Gummen u.a.),
• organischen oder anorganischen Säuren (beispielsweise Schwefelsäure, Phosphorsäure, Salpetersäure, Sulfamidsäure, Essigsäure, Citronensäure, Ameisensäure, Milchsäure, Glykolsäure, Oxalsäure u.a.),
• Flammschutzmitteln,
• Konservierungsmitteln,
• anionischen, kationischen, nichtionischen oder amphoteren Tensiden (wie ethoxylierten Alkoholen und/oder Aminen, Alkyl- und/oder Arylsulfonaten), Emulgatoren, Detergentien, Seifen u.a.;
• Schaum- und Antischaummitteln,
• Frostschutzmitteln (beispielsweise Ethylenglykol, Propylenglykol u.a.);
• Farbmitteln,
• Parfümen, Geruchsmitteln
und anderen dem Fachmann bekannten Additiven ausgewählten Additiven verwendet wird.

7. Verwendung nach einem der vorhergehenden Ansprüche, wobei mindestens eine Alkansulfonsäure in Flüssig-, Gel- oder Schaumgelformulierung verwendet wird.

8. Verfahren zur Entfernung von Zementen, Mörteln, Betonen, Kalken, Zementschlempen und abgeleiteten Produkten mit mindestens einem Schritt, bei dem man eine wirksame Menge mindestens einer Alkansulfonsäure, vorzugsweise Methansulfonsäure, mit den zu entfernenden Zementen, Mörteln, Betonen, Kalken, Zementschlempen und abgeleiteten Produkten durch Kontakt, Eintauchen, Besprengen, Spritzen, Aufbringen einer mehr oder weniger dicken Schicht, gegebenenfalls mit Hilfe von entsprechenden, dem Fachmann bekannten Werkzeugen (Pinseln, Quasten, Spateln u.a.), in Berührung bringt, wobei auf den Schritt des Inberührungbringens gegebenenfalls ein oder mehrere Spül- und/oder Trockungsschritte folgen.

9. Verfahren nach Anspruch 8, **dadurch gekennzeichnet, daß** man es bei einer Temperatur zwischen -20°C und +150°C, vorzugsweise zwischen 0°C und 80°C, noch weiter bevorzugt zwischen 10°C und 80°C, vorzugsweise bei Umgebungstemperatur oder auch bei einer Temperatur zwischen Umgebungstemperatur und etwa 80°C durchführt.

10. Verwendung nach einem der Ansprüche 1 bis 7 zur Abreinigung von Zementen, Mörteln, Betonen, Kalken, Zementschlempen und abgeleiteten Produkten auf allen Arten von Oberflächen, insbesondere Oberflächen aus Metall (Eisen, Stähle, Kupfer, Legierungen u.a.), Betonen, Zementen, Fliesen, Kacheln, Stein, Porzellan, Holz, Papieren, Textilien, Polymeren (Kunststoffen, Klarlacken, Anstrichmitteln, lufttrocknenden Lacken), Gläsern u.a.
